Europäisches Patentamt

European Patent Office

Office européen des brevets

(11) Veröffentlichungsnummer: **0 522 441 A2**

# (12) EUROPÄISCHE PATENTANMELDUNG

(21) Anmeldenummer: **92111182.9**

(22) Anmeldetag: **02.07.92**

(51) Int. Cl.5: **D01G 3/00**, D01G 13/00, D21H 15/02, C04B 30/02, //C09K3/10,(C04B30/02,16:06, 14:04),(C04B30/02,16:06,14:30)

(30) Priorität: **10.07.91 DE 4122737**

(43) Veröffentlichungstag der Anmeldung:
**13.01.93 Patentblatt 93/02**

(84) Benannte Vertragsstaaten:
**AT BE CH DE DK ES FR GB GR IT LI LU MC NL PT SE**

(71) Anmelder: **Akzo N.V.**
**Postbus 9300 Velperweg 76**
**NL-6800 SB Arnhem(NL)**

(72) Erfinder: **Schwartzkopff, Udo, Dr.**
**Fuhlrottstrasse 93**
**W-5600 Wuppertal 1(DE)**
Erfinder: **Peters, Maria Gemma Martien**
**Martinus Wilhelmus**
**van Nispenstraat 103**
**NL-6521 KK Nijmegen(NL)**

(74) Vertreter: **Fett, Günter et al**
**Akzo Patente GmbH Kasinostrasse 19 - 23**
**W-5600 Wuppertal 1(DE)**

(54) **Zusammensetzung mit Kurzfasern aus Aramid.**

(57) Zusammensetzung, die wenigstens synthetische organische Kurzfasern aus Aramid und einen Füllstoff enthält, dadurch gekennzeichnet, daß zumindest ein Teil der Füllstoffe eine Moh's-Härte zwischen 2 und 9 aufweist, und daß die Kurzfasern an ihren Enden in mehrere Fibrillen aufgespalten sind. Insbesondere weisen die Kurzfasern längs der Faserachse Risse, abstehende Fibrillen und/oder Aufspaltungen auf. Ein Verfahren zur Herstellung dieser Zusammensetzung zeichnet sich dadurch aus, daß Kurzfasern aus Aramid mit einem Füllstoff vorbestimmter Moh's-Härte unter Anwendung hoher Scherkräfte gemischt werden.

EP 0 522 441 A2

Gegenstand der vorliegenden Erfindung ist eine Zusammensetzung, die wenigstens synthetische organische Kurzfasern aus Aramid und einen Füllstoff enthält.

Derartige Zusammensetzungen sind beispielsweise in EP-A-261 820 beschrieben. Die bekannte Zusammensetzung wird für die Herstellung von fasrigen Materialien verwendet. Zur Herstellung von Formteilen, die besonders hohe Festigkeit aufweisen sollen, wie beispielsweise Flachdichtungen, eignet sich die bekannte Zusammensetzung weniger.

Es ist deshalb Aufgabe der vorliegenden Erfindung, eine Zusammensetzung, insbesondere zur Herstellung von Formteilen, die eine besonders hohe Festigkeit aufweisen sollen, zur Verfügung zu stellen. Es ist auch Aufgabe der vorliegenden Erfindung, ein Verfahren zur Herstellung dieser Zusammensetzung zur Verfügung zu stellen.

Diese Aufgabe wird erfindungsgemäß bei einer Zusammensetzung der eingangs genannten Art dadurch gelöst, daß zumindest ein Teil der Füllstoffe eine Moh's-Härte zwischen 2 und 9 aufweist, und daß die Kurzfasern an ihren Enden in mehrere Fibrillen aufgespalten sind. Insbesondere weisen die Kurzfasern längs der Faserachse Risse, abstehende Fibrillen und bevorzugt Aufspaltungen auf.

Als Füllstoff hat sich $Al_4Si_4O_{10}(OH)_8$ mit einer Moh's-Härte von etwa 2 bis 2,5 bzw. Zinkoxid mit einer Moh's-Härte von etwa 4 als besonders geeignet herausgestellt. Die Bestimmung der Moh's-Härte wird nach dem Verfahren durchgeführt, welches im Fahrenwald Trans. Am. Inst. Mining. Mat. Engrs. 112, 88, 1943 beschrieben ist.

Die erfindungsgemäß gestellte Aufgabe läßt sich bei einem Verfahren, bei dem Kurzfasern aus Aramid und mindestens einem Füllstoff gemischt werden dadurch lösen, daß den Kurzfasern aus Aramid 20 - 900 Gew.%, bezogen auf das Gewicht der Kurzfasern aus Aramid eines Füllstoffes, der mindestens eine Moh's-Härte von 2 jedoch höchstens eine Moh's-Härte aufweist, die in Abhängigkeit der durchschnittlich in den Kurzfasern aus Aramid enthaltenen Mikrohohlräumen mit einer Abmessung H der Bedingng

$$M = 2{,}75 \times 10^{-3} \times H - 2$$

genügt, wobei die Abmessungen H der Mikrohohlräume Werte zwischen 2000 und 5000 Å-(Angström) annehmen kann, zugeben wird und daß das entstandene Gemisch in einen Mischer gegeben wird, der in der Lage ist, hohe Scherkräfte auf das Gemisch zu übertragen, so lange gemischt wird, bis in dem Gemisch die Kurzfasern aus Aramid an ihren Enden mehrere abgespaltene Enden aufweisen. Als Füllstoff haben sich besonders Minerale wie beispielsweise Kaolin, Magnesiumoxid, weißer Ton, Zinkoxid, Aluminiumoxid, Barit, Quarz oder mineralische Fasern (unter den Bezeichnungen Inorphil bzw. Rockwool erhältlich) bestens bewährt. Allerdings kommen bei den Füllstoffen nur diejenigen in Frage, die die erforderliche Moh's-Härte aufweisen.

Als Mischer, die hohe Scherkräfte übertragen können, kommen solche, bei der Herstellung von Aramidpulpe bekannte Mischer in Frage, welche eine hohe Energieaufnahme und eine geringe Rotorgeschwindigkeit besitzen. Besonders bewährt hat sich hierbei der sogenannte Banburry-Mischer mit tangentialen Rotorblättern. Geeignet sind jedoch auch Mischer, bei denen das Gemisch zwischen zwei Scheiben reibend behandelt wird.

Bei den meistens Mischern ist darauf zu achten, daß sie gut gekühlt werden. Insbesondere bei Banburry-Mischern hat sich die Einhaltung einer Temperatur höchstens 80 °C in der Zusammensetzung während des Mischens als besonders günstig herausgestellt.

Zum Mischen zur Zusammensetzung eignen sich Kurzfasern aus Aramid, die eine durchschnittliche Länge von etwa 6 mm aufweisen, besonders gut. Auf diese Weise wird ausgezeichnete Zusammensetzung für die Herstellung von Formteilen, insbesondere von Flachdichtungen erreicht.

Die Erfindung wird an Hand der nachfolgenden Zeichnungen näher erläutert.

Es zeigen

Figur 1    eine Kurzfaser aus Aramid, wie sie aus dem bekannten Stand der Technik bekannt ist,

Figur 2    eine Kurzfaser aus Aramid, wie sie erfindungsgemäß Verwendung findet.

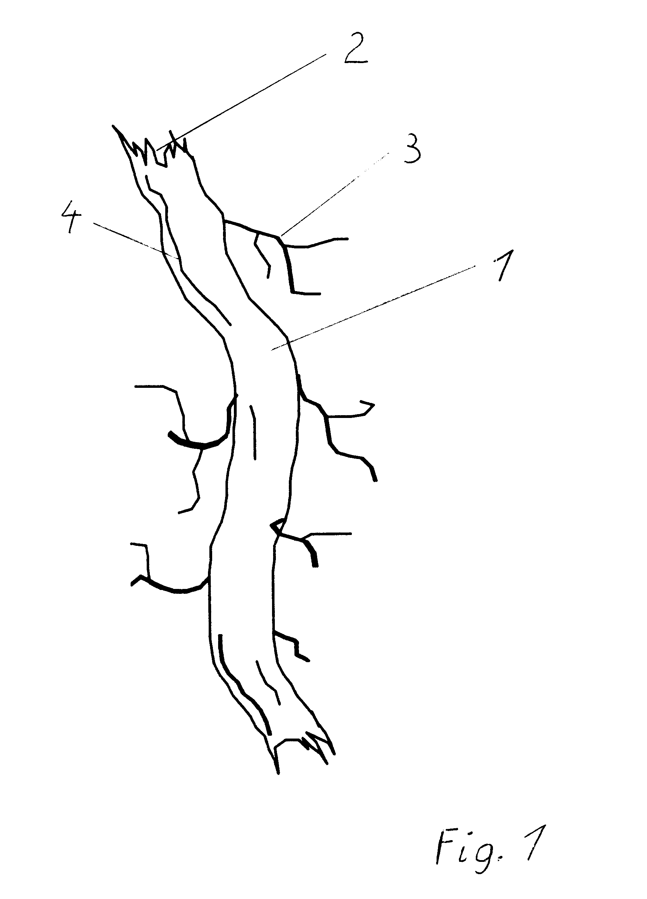

In Figur 1 ist eine Kurzfaser 1 aus Aramid gemäß dem Stand der Technik dargestellt. Die Kurzfaser 1 weist ausgefranste Enden 2 und einige, wenig ausgeprägte Fibrillen 3 sowie einige wenige Risse 4 entlang der Faserachse auf.

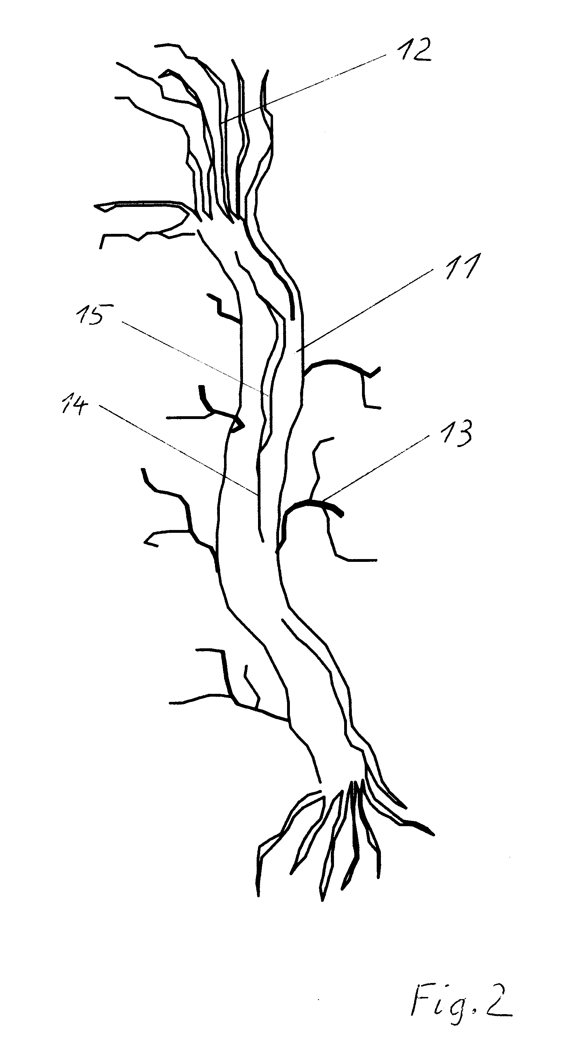

Die in der erfindungsgemäßen Zusammensetzung enthaltene Kurzfaser 11 aus Aramid ist in Figur 2 dargestellt. Im Gegensatz zum Stand der Technik weist die Kurzfaser 11 an ihren Enden mehrere aufgespaltene Fibrillen 12 auf. Die Fibrillen 13 wie auch die Risse 14 längs der Faserachse sind häufiger und ausgeprägter als im Stand der Technik, wobei zusätzlich noch die Kurzfaser 11 längs der Faserachse Aufspaltungen 15 aufweisen kann.

**Patentansprüche**

1.    Zusammensetzung , die wenigstens synthetische organische Kurzfasern (11) aus Aramid und einen Füllstoff enthält, dadurch gekennzeichnet, daß zumindest ein Teil der Füllstoffe eine Moh's-Härte zwischen 2 und 9 aufweist, und daß die Kurzfasern (11) an ihren Enden in mehrere Fibrillen (12) aufgespalten sind.

2. Zusammensetzung nach Anspruch 1, dadurch gekennzeichnet, daß die Kurzfasern (11) längs der Faserachse Risse (14) und abstehende Fibrillen (13) aufweisen.

3. Zusammensetzung nach Anspruch 1 oder 2, dadurch gekennzeichnet, daß die Kurzfasern (11) längs der Faserachse Aufspaltungen (15) aufweisen.

4. Zusammensetzung nach einem oder mehreren der Ansprüche 1 bis 3, dadurch gekennzeichnet, daß der Füllstoff $Al_4 Si_4 O_{10}(OH)_8$ mit einer Moh's-Härte von etwa 2 bis 2,5 enthält.

5. Zusammensetzung nach einem oder mehreren der Ansprüche 1 bis 3, dadurch gekennzeichnet, daß der Füllstoff Zinkoxid mit einer Moh's-Härte von etwa 4 enthält.

6. Verfahren zur Herstellung einer Zusammensetzung nach einem oder mehreren der Ansprüche 1 bis 5, bei dem Kurzfasern aus Aramid mit mindestens einem Füllstoff gemischt werden, dadurch gekennnzeichnet, daß den Kurzfasern aus Aramid 20 - 900 Gewichts-%, bezogen auf das Gewicht der Kurzfasern aus Aramid, eines Füllstoffes, der mindestens eine Moh's-Härte von 2, jedoch höchstens eine Moh's-Härte M aufweist, die in Abhängigkeit der durchschnittlich in den Kurzfasern aus Aramid enthaltenen Mikrohohlräumen mit einer Abmessung H der Bedingung

$$M = 2{,}75 \times 10^{-3} \times H - 2$$

genügt, wobei die Abmessung H der Mikrohohlräume Werte zwischen 2000 und 5000 Å annehmen kann, und gegebenenfalls weitere Füllstoffe zugegeben werden, und daß das entstandene Gemisch in einem Mischer, der in der Lage ist, hohe Scherkräfte auf das Gemisch zu übertragen, so lange gemischt wird, bis in dem Gemisch die Kurzfasern aus Aramid an ihren Enden mehrere abgespaltene Enden aufweisen.

7. Verfahren nach Anspruch 6, dadurch gekennzeichnet, daß die Zusammensetzung während des Mischungsvorganges auf eine Temperatur höchstens 80 °C gekühlt wird.

8. Verfahren nach Anspruch 6 oder 7, dadurch gekennzeichnet, daß zum Mischen Kurzfasern aus Aramid mit einer durchschnittlichen Länge von etwa 6 mm verwendet werden.

Fig. 1

Fig. 2